# FASCICULE DE BREVET EUROPEEN

(11) **EP 3 161 371 B1**
(45) Date de publication et mention de la délivrance du brevet: **19.09.2018**
(21) Numéro de dépôt: 15736550.3
(22) Date de dépôt: 16.06.2015
(51) Int. Cl.: F17C 13/04

(54) **DISPOSITIF ET PROCÉDÉ DE FOURNITURE DE FLUIDE SOUS PRESSION**
VORRICHTUNG UND VERFAHREN ZUR BEREITSTELLUNG EINES DRUCKFLUIDS
DEVICE AND METHOD FOR PROVIDING PRESSURIZED FLUID

(30) Priorité: 25.06.2014 FR 1455870
(43) Date de publication de la demande: 03.05.2017
(73) Titulaire: L'Air Liquide Société Anonyme pour l'Etude et l'Exploitation des Procédés Georges Claude, 75007 Paris (FR)
(72) Inventeur: BERNARD, Philippe, F-60000 Goincourt (FR)
(74) Mandataire: De Cuenca, Emmanuel Jaime
(86) Numéro de dépôt international: PCT/FR2015/051592
(87) Numéro de publication internationale: WO 2015/197946

(56) Documents cités:
- WO-A1-2009/039869
- WO-A1-2013/041823
- DE-A1- 19 911 032
- FR-A1- 2 745 531
- FR-A1- 2 756 360
- FR-A1- 2 840 385
- FR-A1- 2 998 641

## Description

La présente invention concerne un dispositif de fourniture de fluide sous pression, un robinet et un procédé d'identification correspondants.

L'invention concerne plus particulièrement un dispositif de fourniture de fluide sous pression, notamment de gaz sous pression, comprenant un premier ensemble fonctionnel comportant une bouteille de fluide sous pression munie d'un orifice dans lequel est fixé un premier robinet, le premier robinet comprenant un circuit interne de fluide comportant un clapet d'isolation, le dispositif comportant un second ensemble fonctionnel formant une entité physique distincte du premier ensemble, le second ensemble comprenant un second robinet muni d'un circuit interne de fluide, le premier robinet et le second robinet comprenant des organes d'accrochages respectifs formant un système de connexion rapide amovible du second robinet sur le premier robinet.

L'invention concerne en particulier un dispositif de distribution de fluide, notamment de gaz sous pression de type modulaire.

Des exemples de différents dispositifs de distribution de fluide modulaires sont illustrés dans les documents FR2892799A1, FR2979687A1 ou FR2970313A1.

La gestion d'un parc de bouteilles de gaz sous pression et des accessoires associés est souvent fastidieuse aussi bien pour l'utilisateur que pour le gazier qui fabrique commercialise et gère ces dispositifs.

Il est connu de munir des bouteilles de gaz sous pression d'un dispositif d'identification permettant de rationaliser son utilisation ou sa logistique (cf. par exemple EP2249327A1, JP5165409A2 ou DE19911032A1).

Les solutions connues bien que satisfaisantes répondent imparfaitement aux nécessités et évolutions des modes d'utilisation de ces dispositifs

Un but de la présente invention est de pallier tout ou partie des inconvénients de l'art antérieur relevés ci-dessus.

A cette fin, le dispositif de fourniture de fluide selon l'invention, par ailleurs conforme à la définition générique qu'en donne le préambule ci-dessus, est essentiellement caractérisé en ce que le premier ensemble comprend au moins un organe électronique de communication de stockage de données interrogeable à distance sans fil par ondes électromagnétiques et en ce que le second ensemble comprend au moins un organe électronique de communication de lecture à distance sans fil par ondes électromagnétiques de donnée(s) de l'organe électronique du premier ensemble.

Par ailleurs, des modes de réalisation de l'invention peuvent comporter l'une ou plusieurs des caractéristiques suivantes :
- les organes électronique de communication des premier et second ensembles utilisent une technologie de communication sans fil de même nature ayant portée maximale déterminée, ladite portée maximale étant supérieure ou égale à la distance séparant lesdits organes lorsque le second robinet est en position connectée sur le premier robinet,
- les organes électronique de communication des premier et second ensembles sont conformés pour communiquer sans fil selon l'un au moins des technologies suivantes : « Identification par Radio Fréquence » (« RFID »), « Communication en champ proche » (« NFC »),
- l'un au moins des organes électronique de communication des premier et second ensembles est conformé pour avoir une portée de communication sans fil comprise entre un et cinq millimètres et quarante centimètres de préférence entre un centimètre et dix centimètre,
- ledit au moins un organe électronique de communication du premier ensemble est disposé sur ou autour du premier robinet,
- le premier ensemble comprend un chapeau de protection du premier robinet, le chapeau étant fixé à la bouteille et/ou au premier robinet, ledit au moins un organe électronique de communication du premier ensemble étant solidaire du chapeau,
- ledit au moins un organe électronique de communication du second ensemble est intégré ou fixé au second robinet,
- ledit au moins un organe électronique de communication du second ensemble est intégré dans un organe fonctionnel physiquement distinct du second robinet et fixé de façon amovible sur le second robinet,
- ledit au moins un organe électronique de communication du premier ensemble comprend au moins l'un parmi : un transpondeur passif sans dispositif générateur d'ondes électromagnétique, un transpondeur actif comprenant un dispositif générateur d'ondes électromagnétiques, le transpondeur comprenant une mémoire électronique à lecture de données seule ou à lecture et (ré)écriture de données, avec ou sans batterie et en ce que ledit au moins un organe (10) de lecture du second ensemble comprend au moins l'un parmi : un transpondeur passif sans dispositif générateur d'ondes électromagnétique, un transpondeur actif comprenant un dispositif générateur d'ondes électromagnétiques, le transpondeur comprenant une mémoire électronique à lecture de données seule ou à lecture et (ré)écriture de données, avec ou sans batterie,
- le second ensemble comprend un organe de transmission à distance de données comprenant une logique électronique d'acquisition et de traitement de données et une antenne d'émission de données sous forme d'ondes électromagnétiques radio, ladite logique électronique étant reliée ou intégrée à l'organe de lecture du second ensemble et configurée pour recevoir des données provenant de l'organe de lecture du second ensemble et transmettre ces données à distance,
- l'organe de transmission à distance est intégré au second robinet ou à un module distinct relié de façon amovible audit second robinet,
- ledit au moins un organe électronique de communication du premier ensemble est configuré pour stocker au moins une information parmi : une identification de la bouteille, une information relative à la nature du fluide contenu dans la bouteille, une information relative à la contenance maximale de la bouteille, une information relative à la quantité de fluide contenu dans la bouteille, une information d'identification du propriétaire ou utilisateur de la bouteille, une information relative au site d'utilisation de la bouteille, une information relative à la date de péremption du fluide contenu dans la bouteille, une information relative à une certification du fluide contenu dans la bouteille, un historique d'au moins une des informations précédentes,
- ledit au moins un organe électronique de communication du premier ensemble est fixé sur la bouteille,
- au moins l'un parmi le premier ensemble et le second ensemble comprend un organe électronique d'acquisition et de traitement de données, ledit organe électronique d'acquisition et de traitement de données étant relié sans fil ou par voie filaire à l'organe électronique de communication du premier ensemble ou à l'organe de communication du second ensemble, l'organe électronique d'acquisition et de traitement de données étant conformé pour détecter un état connecté ou déconnecté du second robinet par rapport au premier robinet selon l'état de la liaison communication sans fil entre l'organe électronique de communication du premier ensemble et l'organe électronique de communication du second ensemble,
- l'organe électronique d'acquisition et de traitement de données est configuré pour détecter un état connecté ou déconnecté du second robinet par rapport au premier robinet selon que l'organe électronique de communication du second ensemble reçoit ou, respectivement, ne reçoit pas, des données de l'organe électronique émises par l'organe électronique de communication du premier ensemble via un signal avec une intensité déterminée,
- l'organe électronique d'acquisition et de traitement de données est configuré, en cas de détection du passage d'un état déconnecté à un état connecté du second robinet par rapport au premier robinet, pour envoyer et/ou afficher une information déterminée relative à l'état de connexion/déconnexion du second robinet par rapport au premier robinet,
- l'organe électronique d'acquisition et de traitement de données est configuré, en cas de détection du passage d'un état connecté à un état déconnecté du second robinet par rapport au premier robinet, pour envoyer et/ou afficher une information déterminée relative à l'état de connexion/déconnexion du second robinet par rapport au premier robinet,
- l'organe électronique d'acquisition et de traitement de données est configuré, en cas de détection du passage d'un état déconnecté à un état connecté du second robinet par rapport au premier robinet (ou inversement), pour commander au moins l'un parmi : commander l'affichage ou l'envoi d'une information relative au dispositif de fourniture de gaz, démarrer/arrêter l'exécution d'un programme de commande d'au moins un organe fonctionnel du dispositif de fourniture de gaz.
Un mode de réalisation, mais ne définissant pas l'invention, concerne également un robinet de transfert de fluide sous pression pour dispositif de fourniture de fluide sous pression conforme à l'une quelconque des caractéristiques ci-dessus ou ci-dessous comprenant un corps abritant un circuit interne de fluide, des organes d'accrochage amovible mâle, respectivement femelle, à connexion/déconnexion rapide, destinés à coopérer avec des organes d'accrochage femelle/mâle conjugués d'un robinet de stockage solidaire d'une bouteille de fluide sous pression d'un premier ensemble, ledit robinet de transfert comprenant un organe mobile d'actionnement du clapet du robinet de stockage pour commander l'ouverture ou la fermeture de ce dernier, ledit robinet de transfert comprenant au moins un organe électronique de lecture à distance sans fil par ondes électromagnétiques de données configuré pour échanger des données avec un organe électronique de stockage de données interrogeable à distance par sans fil par ondes électromagnétiques conjugué d'un robinet de stockage.

L'invention concerne également un procédé d'identification d'un premier ensemble fonctionnel d'un dispositif de fourniture de fluide sous pression conforme à l'une quelconque des caractéristiques ci-dessus ou ci-dessous, le procédé comprenant une première étape de connexion d'un second robinet d'un second ensemble fonctionnel sur le premier robinet du premier ensemble fonctionnel, une étape de lecture sans fil d'au moins une donnée contenue dans de l'organe électronique de communication du premier par l'organe électronique de communication du second ensemble.

Selon d'autres particularités le procédé comporte au moins une parmi : une étape de mémorisation de ladite information lue dans l'organe électronique de lecture, une étape de transmission à distance de ladite information lue.

D'autres particularités et avantages apparaîtront à la lecture de la description ci-après, faite en référence aux figures dans lesquelles :
- la figure 1 représente une vue en coupe, schématique et partielle, illustrant un premier exemple de réalisation d'un dispositif de fourniture de fluide dans un état déconnecté,
- la figure 2 représente une vue en coupe, schématique et partielle, du dispositif de fourniture de fluide de la figure 1 dans un état connecté,
- les figures 3 à 5 représentent des vues en coupe, schématiques et partielles, illustrant respectivement trois autres modes de réalisation d'un dispositif de fourniture de fluide dans un état connecté.

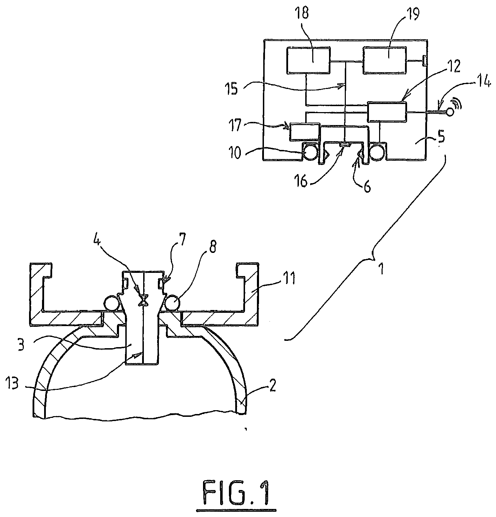

La figure 1 représente schématiquement un dispositif de fourniture de fluide sous pression, notamment de gaz sous pression. Le dispositif 1 comprend un premier ensemble 2, 3, 11 fonctionnel comportant une bouteille 2 de fluide sous pression munie d'un orifice dans lequel est fixé un raccord fluidique ou port appelé ci-après « premier robinet ».

En particulier, ce premier robinet 3 peut-être un simple port de remplissage et/ou de soutirage muni d'un clapet à fermeture automatique (à ouverture par actionnement mécanique et/ou via une pression de gaz. Bien entendu, en variante, ce premier robinet peut être un robinet plus élaboré, muni notamment d'un clapet d'isolation commandé par un organe de commande manuel et/ou électrique et/ou pneumatique.

Le premier robinet 3 est par exemple vissé dans un orifice taraudé de la bouteille 2. C'est-à-dire que le premier 3 robinet est solidaire de la bouteille 2 (fixe) et n'a pas vocation à être démonté en configuration d'utilisation.

Le premier robinet 3 comprend classiquement un circuit 13 interne de fluide relié au volume interne de la bouteille 2. Le circuit comporte au moins un clapet 4 d'isolation. Bien entendu, le premier robinet 3 peut comprendre tout autre organe fonctionnel habituel pour un robinet.

Le dispositif 1 comporte un second ensemble fonctionnel formant une entité physique distincte du premier 2, 3, 11 ensemble. Comme illustré, le second ensemble comprend un second robinet 5 muni également d'un circuit 15 interne de fluide. De la même façon que pour le premier robinet, le circuit 15 interne du second robinet 5 peut comporter au moins un clapet d'isolation et/ou un détendeur de pression et/ou un régulateur de débit et/ou tout autre organe fonctionnel approprié pour un robinet.

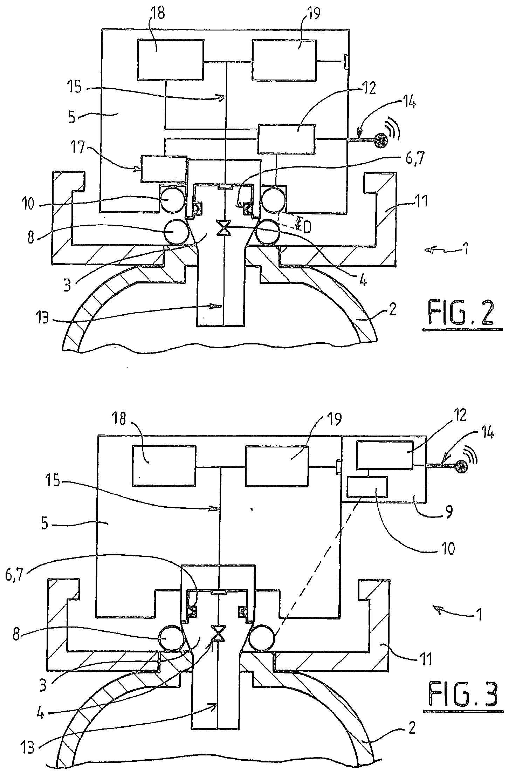

Le premier robinet 3 et le second robinet 5 comprennent chacun des organes 6, 7 d'accrochages respectifs formant un système de connexion rapide amovible du second robinet 5 sur le premier 3 robinet (cf. figure 2 la position connectée). Par exemple, le système de connexion rapide peut comprendre un système à billes coopérant avec des nervures, des griffes d'accrochage coopérant avec des logements conjugués, un système à baïonnette et rainures correspondantes.

Le système de connexion rapide 6, 7 est par exemple du type mâle/femelle et permet l'attache mécanique du second robinet 5 sur le premier robinet 3 de façon démontable. Ce système de verrouillage peut comprendre un organe d'actionnement manuel, comprenant éventuellement un organe de verrouillage mobile nécessitant une ou plusieurs actions manuelles pour l'utilisateur.

Lorsque le second robinet 5 est connecté sur le premier robinet 3, les extrémités des circuits 13, 15 de fluide des deux robinets 3, 5 sont mis en relation de façon étanche et l'écoulement de fluide entre ces deux circuits 13, 15 peut être autorisé ou non en fonction d'ouverture ou de fermeture de la ou des vannes du ou des circuits 13, 15.

A cet effet, le circuit 15 interne du second robinet 5 peut comporter un capteur 18 de pression dans le circuit 15, pour mesurer notamment la pression dans la bouteille 2 lorsque le circuit 15 du second robinet est mis en communication fluidique avec l'intérieur de la bouteille 2 via le premier robinet 3.

Selon une particularité avantageuse, le premier ensemble comprend au moins un organe 8 électronique de stockage de données interrogeable à distance sans fil par ondes électromagnétiques et le second ensemble comprend au moins un organe 10 électronique de lecture à distance sans fil par ondes électromagnétiques de donnée(s) de l'organe 8 électronique du premier. C'est-à-dire que les premier et second ensembles comportent des organes 8, 10 électroniques de communication sans fil pour l'échange d'information(s) entre ces deux entités assemblées et séparables.

Les organes 8, 10 électroniques de communication utilisent de préférence une technologie de communication sans fil de même nature ayant une portée maximale déterminée. La portée maximale de communication est notamment supérieure ou égale à la distance D séparant lesdits organes 8, 10 électroniques lorsque le second robinet 5 est en position connectée sur le premier 3) robinet (cf. figure 2).

Les organes 8, 10 électroniques de communication des premier et second ensembles peuvent notamment être configurés pour communiquer sans fil selon l'un au moins des technologies suivantes : « Identification par Radio Fréquence » (« RFID »), « Communication en champ proche » (« NFC »).

Par exemple, la technologie peut être du type « RFID basse » dite « basse fréquence » (fréquence de quelques centaines de kHz) ou « haute fréquence » (de quelques dizaines à quelques centaines de MHz) ou « ultra haute fréquence » (fréquence de plusieurs centaines de MHz à quelques GHz).

En variante d'autres technologies peuvent être envisagées, par exemple, « Bluetooth ». De préférence cependant, l'un au moins des organes 8, 10 électronique de communication des premier et second ensembles est conformé pour avoir une portée de communication sans fil comprise entre cinq millimètres et quarante centimètres de préférence entre un centimètre et dix centimètres.

Cette portée limitée permet une parfaite communication entre les deux ensembles 8, 10 lorsque les deux robinets 3, 5 sont connectés mais limite les interférences avec d'éventuels autres dispositifs de fourniture de gaz du même type et adjacents.

La communication est cependant assurée quelle que soit la position angulaire du second robinet 5 sur le premier robinet.

Par exemple, les organe 8, 10 électroniques de communication peuvent comprendre chacun au moins l'un parmi : un transpondeur passif sans dispositif générateur d'ondes électromagnétique, un transpondeur actif comprenant un dispositif générateur d'ondes électromagnétiques, le transpondeur comprenant une mémoire électronique à lecture de données seule ou à lecture et (ré)écriture de données, avec ou sans batterie, un transpondeur actif comprenant un dispositif générateur d'ondes électromagnétiques, une mémoire électronique à lecture de données seule ou à lecture et (ré)écriture de données, avec ou sans batterie.

Dans l'exemple des figures 1 et 2, l'organe 8 de communication du premier ensemble est disposé sur ou autour du premier robinet 3. Par exemple, cet organe 8 de communication peut être intégré à un collier, flexible ou rigide, de préférence en matière plastique. Par exemple, le collier 8 est fixé au sommet de la bouteille 2, par exemple entre le premier robinet 3 et la bouteille 2. De même, l'organe 10 de communication de deuxième ensemble peut être intégré ou fixé sur le second robinet 5. Par exemple, l'organe 10 de communication peut être intégré dans un collier disposé à la base du second robinet 5, par exemple concentriquement aux organes d'accrochage du second robinet 5.

Comme illustré aux figures 1 et 2, le premier ensemble peut comprendre un chapeau 11 de protection du premier 3 robinet. Le chapeau 11 est par exemple fixé rigidement à la bouteille 2. Le chapeau 11 forme une paroi de protection autour d'au moins une partie du premier 3 robinet. Le chapeau 11 peu être ajouré et peut comporter le cas échant une zone de préhension pour la manutention du premier ensemble. Dans l'exemple illustré, le chapeau 11 comporte une ouverture supérieure permettant la connexion verticale du second robinet 5 sur l'extrémité supérieure du premier robinet 3.

Comme illustré aux figures 1 et 2, le dispositif peut comporter un élément 17 de détection de la position connectée ou déconnectée du second robinet 5 par rapport au premier robinet. Cet élément de détection peut être constitué ou peut comprendre un ou les organes 8, 10 de communications décrits ci-dessus. C'est-à-dire que l'état de connexion ou de déconnexion peut être détecté selon l'état de la liaison de communication sans fil entre l'organe 8 électronique de lecture du premier ensemble et l'organe 10 électronique du second ensemble. Ainsi, selon la présence et/ou la nature et/ou l'intensité des signaux échangés entre les organes 8, 10 de communications il est possible de déterminer sans ambiguïté si le second robinet 5 est raccordé ou non au premier robinet 3.

Bien entendu, alternativement ou cumulativement, l'organe 17 de détection de la position connectée ou déconnectée peut comprendre tout autre système, notamment un interrupteur, un capteur optique et/ou magnétique et/ou mécanique...

Comme illustré aux figures 1 et 2, le dispositif comprend de préférence une logique électronique 12 d'acquisition et de traitement de données et une antenne 14 d'émission de données sous forme d'ondes électromagnétiques radio (radiofréquence) ou autre. De préférence, tout ou partie de ces éléments sont intégrés ou rapportés sur le second robinet 5.

Alternativement ou cumulativement, l'organe 10 de communication du second ensemble et/ou l'antenne 14 est configuré pour communiquer (dans les deux sens avec tout organe de communication extérieur, notamment un téléphone intelligent (« smartphone »), une passerelle de communication,....

De préférence l'organe 14 de transmission de données (antenne ou autre) est configurée pour communiquer des données sans fil selon tout type de de protocole de communication approprié.

C'est-à-dire que les premier 3 et second 5 ensembles échangent des données sans fil via leurs organes 8, 10 de communication et l'un au moins de ces organes 8, 10 de communication est de plus conformé pour pouvoir échanger des données sans fil (ou avec fil) avec un dispositif distinct distant.

La logique électronique 12 est de préférence reliée ou intégrée à l'organe 10 électronique de communication du second ensemble et configurée pour recevoir des données provenant de l'organe 10 électronique de communication et de lecture du second ensemble et transmettre ces données à distance, par exemple vers un relai de communication et/ou vers une plate-forme centrale de traitement de données.

C'est-à-dire que la logique 12 électronique peut commander l'envoi à distance de la ou des informations échangées entre le premier et le second ensemble ou les informations collectées uniquement par le second ensemble. De préférence, cette antenne 14 permet de recevoir des informations de l'extérieur du dispositif, pour le cas échéant les transmettre (les stocker/modifier) dans l'organe 8 de communication du premier ensemble et/ou dans la logique 12 électronique.

L'organe 8 électronique de communication du premier ensemble peut être configuré pour stocker au moins une information dynamique (une variable telle que d'une valeur de pression, une date courante...) et/ou une information statique (tel qu'un numéro d'identification de la bouteille et/ou du premier robinet 3).

Par exemple, l'organe 8 électronique de communication du premier ensemble peut être configuré pour stocker au moins une information parmi : une identification de la bouteille 2, une information relative à la nature du fluide contenu dans la bouteille 2, une information relative à la contenance maximale de la bouteille, une information relative à la quantité de fluide contenu dans la bouteille 2, une information d'identification du propriétaire ou utilisateur de la bouteille 2, une information relative au site d'utilisation de la bouteille 2, une information relative à la date de péremption du fluide contenu dans la bouteille 2, une information relative à une certification du fluide contenu dans la bouteille 2, une date de ré-épreuve de la bouteille, un historique d'au moins une des informations précédentes...

Ainsi, par exemple, l'organe 12 électronique d'acquisition et de traitement de données peut être configuré pour détecter un état connecté ou déconnecté du second robinet 5 par rapport au premier robinet 3 selon que l'organe 10 électronique de communication du second ensemble reçoit ou, respectivement, ne reçoit pas, des données de l'organe 10 électronique émises par l'organe 8 de communication du premier ensemble.

L'organe 12 électronique d'acquisition et de traitement de données peut être configuré également pour vérifier la compatibilité technique ou fonctionnelle entre le premier 3 et le second robinet 5 (par exemple par comparaison de tables préétablies).

L'organe 12 électronique d'acquisition et de traitement de données peut être configuré, en cas de détection du passage d'un état déconnecté à un état connecté du second robinet 5 par rapport au premier robinet 3, pour envoyer et/ou afficher une information relative à l'état de connexion/déconnexion du second robinet 5 par rapport au premier robinet 3. A cet effet, le dispositif 1 peur comporter un écran d'affichage d'une information contextuelle.

De même, l'organe 12 électronique d'acquisition et de traitement de données peut être configuré, en cas notamment de détection du passage d'un état connecté à un état déconnecté du second robinet 5 par rapport au premier robinet 3, pour envoyer et/ou afficher une information relative à l'état de connexion/déconnexion du second robinet 5 par rapport au premier robinet 3.

De même, l'organe 12 électronique d'acquisition et de traitement de données peut être configuré, en cas de détection du passage d'un état déconnecté à un état connecté du second robinet 5 par rapport au premier robinet 3 (ou inversement), pour commander au moins l'un parmi : commander l'affichage ou l'envoi d'une information relative au dispositif de fourniture de gaz, démarrer/arrêter l'exécution d'un programme de commande d'au moins un organe fonctionnel du dispositif de fourniture de gaz (mesure de pression, calcul d'autonomie, affichage pour l'utilisateur d'une information d'autonomie en gaz, une information de débit de gaz consommé, une alarme...).

Les figures 3 à 5 illustrent des variantes de réalisation dont les éléments identiques à ceux décrits ci-dessus sont désignés par les mêmes références numériques et ne sont pas décrit une seconde fois.

Dans la variante de la figure 3 l'organe 10 de communication du second ensemble n'est pas intégré au second robinet 5 mais est intégré dans un module 9 de communication distinct du second robinet 5 et qui est fixé de façon amovible (connexion rapide) sur le second robinet 5. Comme illustré à la figure 3, ce module 9 peut intégrer également tout ou partie de la logique électronique et/ou l'antenne 14.

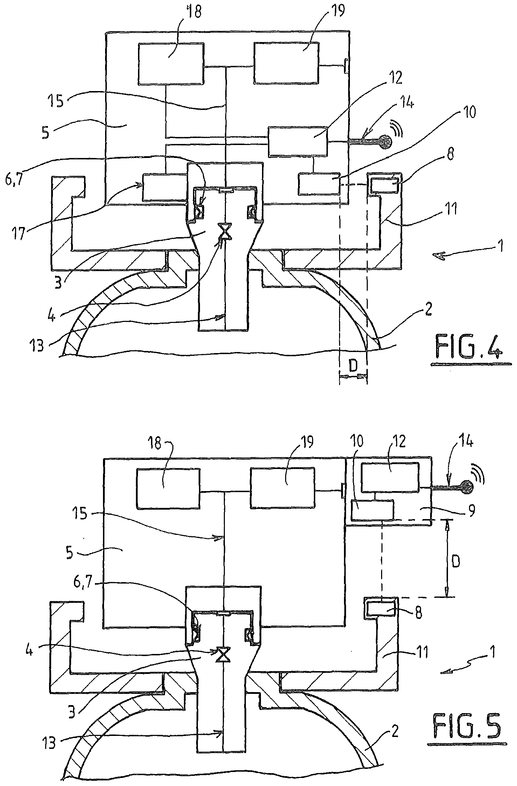

Dans la variante de la figure 4 l'organe 8 de communication du premier ensemble est intégré dans le chapeau 11, idéalement fabriqué en matière métallique et/ou plastique. De plus, comme illustré l'organe 8 de communication du premier est intégré dans le chapeau à un emplacement de préférence adjacent à la portion du chapeau 11 comprenant l'organe 8 de communication.

Dans la variante de la figure 5 l'organe 8 de communication du premier ensemble est intégré dans le chapeau 11 tandis que l'organe 10 de communication du second ensemble est intégré dans un module 9 de communication distinct du second robinet 5 et qui est fixé de façon amovible (connexion rapide) sur le second 5 robinet.

Le dispositif décrit ci-dessus permet ainsi de gérer les éléments modulaires d'un ou plusieurs dispositifs de transfert de gaz. En particulier, le dispositif permet de gérer les échanges entre un ou plusieurs premiers ensembles (incluant une bouteille) et un ou plusieurs seconds robinets 5 sélectivement connectables.

Le dispositif permet de réaliser une reconnaissance automatique de la bouteille 2 par le second robinet 5 (et inversement) pour le cas échéant assurer une traçabilité et/ou compatibilité des connexions et utilisations.

Ceci permet une meilleure gestion d'un parc de bouteilles et de robinets associés. Ceci peut être utilisé notamment pour proposer des services tels que l'assistance à la gestion de stock, la commande automatique de matériel, de gaz, la mise à disposition des données de sécurité...

Dans le cas où le premier 3 et/ou le second 5 robinet est équipé d'un capteur de pression mesurant la pression dans la bouteille 2, cette information peut être transmise et/ou affichée et/ou utilisée pour calculer une autonomie, une consommation de gaz via une électronique de traitement (par exemple la logique 12 électronique de traitement de données comprenant au moins un microprocesseur ou tout autre système approprié), pour générer une alerte (par exemple signaler que la bouteille est presque vide).

## Revendications

1. Dispositif de fourniture de fluide sous pression, notamment de gaz sous pression, comprenant un premier ensemble (2, 3, 11) fonctionnel comportant une bouteille (2) de fluide sous pression munie d'un orifice dans lequel est fixé un premier robinet (3), la bouteille (1) comprenant un chapeau (11) de protection du premier robinet fixé rigidement à la bouteille (2) le premier (3) robinet comprenant un circuit (13) interne de fluide comportant un clapet (4) d'isolation, le dispositif (1) comportant un second robinet (5) formant une entité physique distincte du premier robinet (3), le second robinet (5) étant muni d'un circuit (15) interne de fluide, le second robinet (5) comprenant un organe (16) mobile d'actionnement du clapet (4) d'isolation du premier robinet (3) pour commander l'ouverture ou la fermeture de ce dernier, le premier (3) robinet et le second (5) robinet comprenant des organes (6, 7) d'accrochages respectifs formant un système de connexion rapide mâle/femelle amovible du second robinet (5) sur le premier (3) robinet, lorsque le second robinet (5) est en position connectée sur le premier robinet (3), le second robinet (5) étant partiellement logé dans le chapeau (11) **caractérisé en ce que** le premier ensemble (2, 3, 11) comprend au moins un organe (8) électronique de communication et de stockage de données interrogeable à distance sans fil par ondes électromagnétiques et **en ce que** le second robinet (5) comprend au moins un organe (10) électronique de communication de lecture à distance sans fil par ondes électromagnétiques de donnée(s) de l'organe (8) électronique du premier (2, 3, 11) ensemble, le au moins un organe (8) électronique de communication du premier ensemble étant solidaire du chapeau (11) ou est disposé sur ou autour du premier robinet (3) ou est fixé sur la bouteille (2), le second robinet (5, 9) comprenant un organe (12, 14) de transmission à distance de données comprenant une logique électronique (12) d'acquisition et de traitement de données et une antenne (14) d'émission de données sous forme d'ondes électromagnétiques radio, ladite logique électronique (12) étant reliée ou intégrée à l'organe (10) électronique de communication et de lecture du second (5, 9) robinet et configurée pour recevoir des données provenant de l'organe (10) électronique de communication et de lecture et transmettre ces données à distance.

2. Dispositif selon la revendication 1, **caractérisé en ce que** les organes (8, 10) électronique de communication des premier ensemble (2, 3, 11) et second robinet (5, 9) utilisent une technologie de communication sans fil de même nature ayant portée maximale déterminée, ladite portée maximale étant supérieure ou égale à la distance séparant lesdits organes (8, 10) lorsque le second robinet (5) est en position connectée sur le premier (3) robinet.

3. Dispositif selon la revendication 1 ou 2, **caractérisé en ce que** les organes (8, 10) électronique de communication des premier ensemble (2, 3, 11) et second robinet (5, 9) sont conformés pour communiquer sans fil selon l'un au moins des technologies suivantes : « Identification par Radio Fréquence » (« RFID »), « Communication en champ proche » (« NFC »).

4. Dispositif selon l'une quelconque des revendications 1 à 3, **caractérisé en ce que** l'un au moins des organes (8, 10) électronique de communication du premier ensemble (2, 3, 11) et du second robinet (5, 9) est conformé pour avoir une portée de communication sans fil comprise entre un et cinq millimètres et quarante centimètres de préférence entre un centimètre et dix centimètre.

5. Dispositif selon l'une quelconque des revendications 1 à 4, **caractérisé en ce que** l'organe (8) électronique de communication du premier ensemble (2, 3, 11) est logé au niveau de l'extrémité supérieure du chapeau (11) lorsque le chapeau est en position verticale d'utilisation.

6. Dispositif selon la revendication 5 **caractérisé en ce que** le chapeau comporte une paroi formant une enceinte autour du premier robinet, l'enceinte délimitant une ouverture vers le haut lorsque le chapeau est en position verticale d'utilisation, l'organe (8) électronique de communication du premier ensemble étant logé au niveau de l'extrémité supérieure de la paroi formant une enceinte autour du premier robinet.

7. Dispositif selon l'une quelconque des revendications 1 à 6, **caractérisé en ce que** ledit au moins un organe (10) électronique de communication du second robinet (5, 9) est intégré ou fixé au second (5) robinet.

8. Dispositif selon l'une quelconque des revendications 1 à 7, **caractérisé en ce que** ledit au moins un organe (10) électronique de communication du second robinet (5, 9) est intégré dans un organe (9) fonctionnel physiquement distinct du second (5) robinet et fixé de façon amovible sur le second (5) robinet via au système de connexion rapide.

9. Dispositif selon l'une quelconque des revendications 1 à 8, **caractérisé en ce que** ledit au moins un organe (8) électronique de communication du premier ensemble (2, 3, 11) comprend au moins l'un parmi : un transpondeur passif sans dispositif générateur d'ondes électromagnétique, un transpondeur actif comprenant un dispositif générateur d'ondes électromagnétiques, le transpondeur comprenant une mémoire électronique à lecture de données seule ou à lecture et (ré)écriture de données, avec ou sans batterie et **en ce que** ledit au moins un organe (10) de lecture du second (5, 9) robinet comprend au moins l'un parmi : un transpondeur passif sans dispositif générateur d'ondes électromagnétique, un transpondeur actif comprenant un dispositif générateur d'ondes électromagnétiques, le transpondeur comprenant une mémoire électronique à lecture de données seule ou à lecture et (ré)écriture de données, avec ou sans batterie.

10. Dispositif selon l'une quelconque des revendications 1 à 9, **caractérisé en ce que** l'organe (12, 14) de transmission à distance est intégré au second (5) robinet ou à un module (9) distinct relié de façon amovible audit second (5) robinet.

11. Dispositif selon l'une quelconque des revendications 1 à 10, **caractérisé en ce que** ledit au moins un organe (8) électronique de communication du premier (2, 3, 11) ensemble est configuré pour stocker au moins une information parmi : une identification de la bouteille (2), une information relative à la nature du fluide contenu dans la bouteille (2), une information relative à la contenance maximale de la bouteille, une information relative à la quantité de fluide contenu dans la bouteille (2), une information d'identification du propriétaire ou utilisateur de la bouteille (2), une information relative au site d'utilisation de la bouteille (2), une information relative à la date de péremption du fluide contenu dans la bouteille (2), une information relative à une certification du fluide contenu dans la bouteille (2), un historique d'au moins une des informations précédentes.

12. Dispositif selon l'une quelconque des revendications 1 à 11 **caractérisé en ce qu'**au moins l'un parmi : le premier ensemble (2, 3, 11) et le second robinet (5), comprend un organe (12) électronique d'acquisition et de traitement de données, ledit organe (12) électronique d'acquisition et de traitement de données étant relié sans fil ou par voie filaire à l'organe (8) électronique de communication du premier ensemble (2, 3, 11) ou à l'organe (10) de communication du second robinet (5), l'organe (12) électronique d'acquisition et de traitement de données étant conformé pour détecter un état connecté ou déconnecté du second robinet (5) par rapport au premier robinet (3) selon l'état de la liaison communication sans fil entre l'organe (8) électronique de communication du premier ensemble et l'organe (10) électronique de communication du second robinet.

13. Dispositif selon la revendication 12 **caractérisé en ce que** l'organe (12) électronique d'acquisition et de traitement de données est configuré pour détecter un état connecté ou déconnecté du second robinet (5) par rapport au premier robinet (3) selon que l'organe (10) électronique de communication du second robinet reçoit ou, respectivement, ne reçoit pas, des données de l'organe (8) électronique émises par l'organe (10) électronique de communication du premier ensemble via un signal avec une intensité déterminée.

14. Procédé d'identification d'un premier ensemble (2, 3, 11) fonctionnel d'un dispositif de fourniture de fluide sous pression conforme à l'une quelconque des revendications 1 à 13, le procédé comprenant une première étape de connexion d'un second robinet (5) d'un second ensemble (5, 9) fonctionnel sur le premier (3) robinet du premier ensemble (2, 3, 11) fonctionnel, une étape de lecture sans fil d'au moins une donnée contenue dans de l'organe (8) électronique de communication du premier (2, 3, 11) ensemble fonctionnel par l'organe (10) électronique de communication du second ensemble (5, 9) fonctionnel.

15. Procédé selon la revendication 14, **caractérisé en ce qu'**il comporte au moins une parmi : une étape de mémorisation de ladite information lue dans l'organe (10) électronique de lecture, une étape de transmission à distance de ladite information lue.

## Patentansprüche

1. Vorrichtung zur Lieferung von Druckfluid, insbesondere von Druckgas, eine erste funktionale Baugruppe (2, 3, 11) umfassend, aufweisend eine Flasche (2) mit Druckfluid, die mit einer Öffnung versehen ist, in der ein erster Hahn (3) befestigt ist, wobei die Flasche (1) eine Kappe (11) zum Schutz des ersten Hahns umfasst, der fest an der Flasche (2) befestigt ist, wobei der erste Hahn (3) einen internen Fluidkreislauf (13) umfasst, ein Absperrventil (4) aufweisend, wobei die Vorrichtung (1) einen zweiten Hahn (5) aufweist, der eine vom ersten Hahn (3) unterschiedliche physische Einheit bildet, wobei der zweite Hahn (5) mit einem internen Fluidkreislauf (15) versehen ist, wobei der zweite Hahn (5) ein bewegliches Organ (16) zum Betätigen des Absperrventils (4) des ersten Hahns (3) zum Steuern des Öffnens oder Schließens des letzteren umfasst, wobei der erste Hahn (3) und der zweite Hahn (5) jeweilige Befestigungsorgane (6, 7) umfassen, die ein Stecker/Buchse-Schnellanschlusssystem am ersten Hahn (3) bilden, das vom zweiten Hahn (5) abnehmbar ist, wenn der zweite Hahn (5) in der angeschlossenen Position an dem ersten Hahn (3) ist, wobei der zweite Hahn (5) teilweise in der Kappe (11) untergebracht ist, **dadurch gekennzeichnet, dass** die erste Baugruppe (2, 3, 11) mindestens ein elektronisches Organ (8) zur Kommunikation und Datenspeicherung umfasst, das über elektromagnetische Wellen drahtlos fernauslesbar ist, und dass der zweite Hahn (5) mindestens ein elektronisches Kommunikationsorgan (10) zum drahtlosen Fernauslesen über elektromagnetische Wellen der Daten des elektronischen Organs (8) der ersten Baugruppe (2, 3, 11) umfasst, wobei das mindestens eine elektronische Kommunikationsorgan (8) der ersten Baugruppe mit der Kappe (11) einstückig ausgeführt ist oder auf oder um den ersten Hahn (3) herum angeordnet oder auf der Flasche (2) befestigt ist, der zweite Hahn (5, 9) ein Organ (12, 14) zur Datenfernübertragung eine elektronische Datenerfassungs- und Verarbeitungslogik (12) umfassend und eine Antenne (14) zum Übertragen von Daten in Form von elektromagnetischen Funkwellen umfasst, wobei die elektronische Logik (12) mit dem elektronischen Kommunikations- und Ausleseorgan (10) des zweiten Hahns (5, 9) verbunden oder darin integriert und derart konfiguriert ist, um Daten vom elektronischen Kommunikations- und Ausleseorgan (10) zu empfangen und diese Daten fernzuübertragen.

2. Vorrichtung nach Anspruch 1, **dadurch gekennzeichnet, dass** die elektronischen Kommunikationsorgane (8, 10) der ersten Baugruppe (2, 3, 11) und des zweiten Hahns (5, 9) eine drahtlose Kommunikationstechnologie derselben Art verwenden, die eine bestimmte maximale Reichweite aufweist, wobei die maximale Reichweite größer oder gleich dem Abstand ist, der die Organe (8, 10) trennt, wenn der zweite Hahn (5) in angeschlossener Position auf dem ersten Hahn (3) ist.

3. Vorrichtung nach Anspruch 1 oder 2, **dadurch gekennzeichnet, dass** die elektronischen Kommunikationsorgane (8, 10) der ersten Baugruppe (2, 3, 11) und des zweiten Hahns (5, 9) für die drahtlose Kommunikation über mindestens eine der folgenden Technologien ausgelegt sind: "Radio Frequency Identification" ("RFID"), "Near Field Communication" ("NFC").

4. Vorrichtung nach einem der Ansprüche 1 bis 3, **dadurch gekennzeichnet, dass** mindestens eines der elektronischen Kommunikationsorgane (8, 10) der ersten Baugruppe (2, 3, 11) und des zweiten Hahns (5, 9) für eine drahtlose Kommunikationsreichweite zwischen einem und fünf Millimetern und vierzig Zentimetern, vorzugsweise zwischen einem Zentimeter und zehn Zentimetern ausgelegt ist.

5. Vorrichtung nach einem der Ansprüche 1 bis 4, **dadurch gekennzeichnet, dass** das elektronische Kommunikationsorgan (8) der ersten Baugruppe (2, 3, 11) im Bereich des oberen Endes der Kappe (11) sitzt, wenn sich die Kappe in vertikaler Gebrauchslage befindet.

6. Vorrichtung nach Anspruch 5, **dadurch gekennzeichnet, dass** die Kappe eine Wand aufweist, die eine Einschließung um den ersten Hahn bildet, wobei die Einschließung eine Apertur nach oben abgrenzt, wenn sich die Kappe in der vertikalen Gebrauchslage befindet, wobei das elektronische Kommunikationsorgan (8) der ersten Baugruppe im Bereich des oberen Endes der Wand sitzt, die eine Einschließung um den erste Hahn herum bildet.

7. Vorrichtung nach einem der Ansprüche 1 bis 6, **dadurch gekennzeichnet, dass** das mindestens eine elektronische Kommunikationsorgan (10) des zweiten Hahns (5, 9) im zweiten Hahn (5) integriert oder daran befestigt ist.

8. Vorrichtung nach einem der Ansprüche 1 bis 7, **dadurch gekennzeichnet, dass** das mindestens eine elektronische Kommunikationsorgan (10) des zweiten Hahns (5, 9) in ein funktionales Organ (9) integriert ist, das sich physisch von dem zweiten Hahn (5) unterscheidet und über das Schnellanschlusssystem abnehmbar an dem zweiten Hahn (5) befestigt ist.

9. Vorrichtung nach einem der Ansprüche 1 bis 8, **dadurch gekennzeichnet, dass** das mindestens eine elektronische Kommunikationsorgan (8) der ersten Baugruppe (2, 3, 11) mindestens eines umfasst von: einem passiven Transponder ohne Vorrichtung zur Erzeugung elektromagnetischer Wellen, einem aktiven Transponder, eine Vorrichtung zur Erzeugung elektromagnetischer Wellen umfassend, wobei der Transponder einen elektronischen schreibgeschützten Datenspeicher oder Datenspeicher zum Lesen und (Wieder)beschreiben mit oder ohne Batterie umfasst, und dass das mindestens eine Abfrageorgan (10) des zweiten Hahns (5, 9) mindestens eines umfasst von: einem passiven Transponder ohne Vorrichtung zur Erzeugung elektromagnetischer Wellen, einem aktiven Transponder, eine Vorrichtung zur Erzeugung elektromagnetischer Wellen umfassend, wobei der Transponder einen elektronischen schreibgeschützten Datenspeicher oder Datenspeicher zum Lesen und (Wieder)beschreiben mit oder ohne Batterie umfasst.

10. Vorrichtung nach einem der Ansprüche 1 bis 9, **dadurch gekennzeichnet, dass** das Fernübertragungsorgan (12, 14) in den zweiten Hahn (5) oder ein separates, lösbar mit dem zweiten Hahn (5) verbundenes Modul (9) integriert ist.

11. Vorrichtung nach einem der Ansprüche 1 bis 10, **dadurch gekennzeichnet, dass** das mindestens eine elektronische Kommunikationsorgan (8) der ersten Baugruppe (2, 3, 11) dafür konfiguriert ist, mindestens eine Information aus den folgenden zu speichern: eine Identifizierung der Flasche (2), eine Informationen über die Art des in der Flasche (2) enthaltenen Fluids, eine Information über die maximale Kapazität der Flasche, eine Information über die in der Flasche (2) enthaltene Fluidmenge, eine Information zur Identifizierung des Eigentümers oder Benutzers der Flasche (2), eine Information über den Verwendungsort der Flasche (2), eine Information über das Verfallsdatum des in der Flasche (2) enthaltenen Fluids, eine Information über die Zertifizierung des in der Flasche (2) enthaltenen Fluids, eine Historie von mindestens einer der vorgenannten Informationen.

12. Vorrichtung nach einem der Ansprüche 1 bis 11, **dadurch gekennzeichnet, dass** mindestens eines von: der ersten Baugruppe (2, 3, 11) und dem zweiten Hahn (5) ein elektronisches Organ zur Datenerfassung und -verarbeitung (12) umfasst, wobei dieses elektronische Organ zur Datenerfassung und -verarbeitung (12) drahtlos oder über einen Draht mit dem elektronischen Kommunikationsorgan (8) der ersten Baugruppe (2, 3, 11) oder mit dem Kommunikationsorgan (10) des zweiten Hahns (5) verbunden ist, wobei das elektronische Organ zur Datenerfassung und -verarbeitung (12) so ausgelegt ist, dass es einen angeschlossenen oder nicht angeschlossenen Zustand des zweiten Hahns (5) in Bezug auf den ersten Hahn (3) anhand des Zustands der drahtlosen Kommunikationsverbindung zwischen dem elektronischen Kommunikationsorgan (8) der ersten Baugruppe und dem elektronischen Kommunikationsorgan (10) des zweiten Hahns erkennt.

13. Vorrichtung nach Anspruch 12, **dadurch gekennzeichnet, dass** das elektronische Organ zur Datenerfassung und -verarbeitung (12) so konfiguriert ist, dass es einen angeschlossenen oder nicht angeschlossenen Zustand des zweiten Hahns (5) in Bezug auf den ersten Hahn (3) daran erkennt, ob das elektronische Kommunikationsorgan (10) des zweiten Hahns Daten vom elektronischen Kommunikationsorgan (8) empfängt bzw. nicht empfängt, die vom elektronischen Kommunikationsorgan (10) der ersten Baugruppe über ein Signal mit einer bestimmten Intensität gesendet werden.

14. Verfahren zur Identifikation einer ersten funktionalen Baugruppe (2, 3, 11) einer Vorrichtung zur Lieferung von Druckfluid nach einem der Ansprüche 1 bis 13, wobei das Verfahren einen ersten Schritt des Anschließens eines zweiten Hahns (5) einer zweiten funktionalen Baugruppe (5, 9) an den ersten Hahn (3) der ersten funktionalen Baugruppe (2, 3, 11), einen Schritt des drahtlosen Auslesens von mindestens einem in dem elektronischen Kommunikationsorgan (8) der ersten (2, 3, 11) enthaltenen Datum durch das elektronische Kommunikationsorgan (10) der zweiten Baugruppe (5, 9) umfasst.

15. Verfahren nach Anspruch 14, **dadurch gekennzeichnet, dass** es mindestens eines aufweist von: einem Schritt des Speicherns der in dem elektronischen Leseorgan (10) ausgelesenen Information, einem Schritt des Fernübertragens der ausgelesenen Information.

## Claims

1. Device for supplying fluid under pressure, in particular, gas under pressure, comprising a first functional assembly (2, 3, 11) including a bottle (2) of fluid under pressure having an opening into which is fitted a first tap (3), the bottle (1) including a protective cap (11) for the first tap rigidly fixed to the bottle (2) the first tap (3) comprising an internal fluid circuit (13) including an isolation valve (4), the device (1) including a second tap (5) forming a physical entity distinct from the first tap (3), the second tap (5) being fitted with an internal fluid circuit (15), the second tap (5) including a moveable member (16) operating the isolation valve (4) of the first tap (3) to command the opening or the closing of this latter, the first tap (3) and the second tap (5) including respective fixing members (6, 7) forming a system of rapid flexible male/female connection of the second tap (5) to the first tap (3), when the second tap (5) is in the position connected to the first tap (3), the second tap (5) being partially housed in the cap (11) **characterised in that** this first assembly (2, 3, 11) includes at least one electronic member (8) for communication and storage of data able to be searched remotely without wires by electromagnetic waves and **in that** the second tap (5) includes at least one electronic communication member (10) for remote wireless reading of data by electromagnetic waves in the electronic member (8) of the first assembly (2, 3, 11), the at least one electronic member (8) for communication of the first assembly being solidly fixed to the cap (11) or is fitted onto or around the first tap (3) or is fixed onto the bottle (2), the second tap (5, 9) including a remote data transmission member (12, 14) including an electronic logic unit (12) for acquisition and treatment of data and an antenna (14) for emission of data in the form of electromagnetic radio waves, the said electronic logic unit (12) being connected to or integrated into the electronic communication and reading member (10) of the second tap (5, 9) and is configured to receive data coming from the electronic communication and reading member (10) and remotely transmit those data.

2. Device according to claim 1, **characterised in that** the electronic communication members (8, 10) of the first assembly (2, 3, 11) and the second tap (5, 9) use a wireless communication technology of a same type having a determined maximum range, the said maximum range being greater than or equal to the distance separating the said members (8, 10) when the second tap (5) is in the position connected to the first tap (3).

3. Device according to claim 1 or 2, **characterised in that** the electronic communication members (8, 10) of the first assembly (2, 3, 11) and the second tap (5, 9) are configured to communicate wirelessly according to at least one of the following technologies: "Radio Frequency Identification" ("RFID") "Near Field Communication" ("NFC").

4. Device according to any one of claims 1 to 3 **characterised in that** at least one of the electronic communication members (8, 10) of the first assembly (2, 3, 11) and of the second tap (5, 9) is configured to have a wireless communication range comprised between one and five millimetres and forty centimetres, preferably between one centimetre and ten centimetres.

5. Device according to any one of claims 1 to 4, **characterised in that** the electronic communication member (8) of the first assembly (2, 3, 11) is housed in the upper extremity of the cap (11) when the cap is in the vertical use position.

6. Device according to claim 5, **characterised in that** the cap includes a wall forming an enclosure around the first tap, the enclosure limiting an opening upwards when the cap is in the vertical use position, the electronic communication member (8) of the first assembly being housed at the upper extremity of the wall forming an enclosure around the first tap.

7. Device according to any one of claims 1 to 6 **characterised in that** the said at least one electronic communication member (10) of the second tap (5, 9) is integrated into or fixed to the second tap (5).

8. Device according to any one of claims 1 to 7 **characterised in that** the said at least one electronic communication member (10) of the second tap (5, 9) is integrated into a functional member (9) physically distinct from the second tap (5) and fixed in a flexible manner to the second tap (5) via a rapid connection system.

9. Device according to any one of claims 1 to 8 **characterised in that** the said at least one electronic communication member (8) of the first assembly (2, 3, 11) includes at least one of the following: a passive transponder without electromagnetic wave generator, an active transponder including an electromagnetic wave generator, the transponder including a data read only electronic memory or data read and re-write, with or without battery and **in that** said at least one member (10) for reading the second tap (5, 9) includes at least one of the following: a passive transponder without electromagnetic wave generator, an active transponder including an electromagnetic wave generator, the transponder including a data read only electronic memory, or data read and re-write, with or without battery.

10. Device according to any one of claims 1 to 9, **characterised in that** the remote transmission member (12, 14) is integrated into the second tap (5) or to a distinct module (9) connected in a flexible way to the said second tap (5).

11. Device according to any one of claims 1 to 10, **characterised in that** the said at least one electronic communication member (8) of the first assembly (2, 3, 11) is configured to store at least one information from the following: identification of the bottle (2), information relative to the type of fluid contained in the bottle (2), information relative to the maximum content of the bottle, information relative to the quantity of fluid contained in the bottle (2), information identifying the owner or user of the bottle (2), information relative to the site where the bottle (2) is used, information relative to the expiry date of the fluid contained in the bottle (2), information relative to the certification of the fluid contained in the bottle (2), the history of at least one of the precedent information.

12. Device according to any one of claims 1 to 11 **characterised in that** it includes at least one from the following: the first assembly (2, 3, 11) and the second tap (5), including an electronic member (12) for acquisition and treatment of data, the said electronic member (12) for acquisition and treatment of data being connected wirelessly or by wires to the electronic communication member (8) of the first assembly (2, 3, 11) or to the communication member (10) of the second tap (5), the electronic member (12) for acquisition and treatment of data being configured to detect a connected or disconnected state of the second tap (5) compared to the first tap (3) depending on the state of the wireless communication link between the electronic communication member (8) of the first assembly and the electronic communication member (10) of the second tap.

13. Device according to claim 12, **characterised in that** the electronic member (12) for acquisition and treatment of data is configured to detect a connected or disconnected state of the second tap (5) compared to the first tap (3) depending on whether the electronic communication member (10) of the second tap receives or respectively, does not receive the data from the electronic member (8) emitted by the electronic communication member (10) of the first assembly via a signal with a determined intensity.

14. Identification method of a first functional assembly (2, 3, 11), of a device to supply fluid under pressure conform to any one of claims 1 to 13, the method including a first step of connection to a second tap (5) of a second functional assembly (5, 9) to the first tap (3) of the first functional assembly (2, 3, 11), a step of wireless reading of at least one data contained in the electronic communication member (8) of the first (2, 3, 11) by the electronic communication member (10) of the second assembly (5, 9).

15. Method according to claim 14, **characterised in that** it includes at least one from: a memorisation step if the said information read in the electronic readable member (10), a remote transmission step of the said read information.
